(19) Europäisches Patentamt
European Patent Office
Office européen des brevets

(11) **EP 2 187 087 A1**

(12) **EUROPEAN PATENT APPLICATION**
published in accordance with Art. 153(4) EPC

(43) Date of publication:
**19.05.2010 Bulletin 2010/20**

(51) Int Cl.:
*F16F 15/02* (2006.01)          *B32B 7/02* (2006.01)
*B32B 25/02* (2006.01)

(21) Application number: **08829931.8**

(22) Date of filing: **01.09.2008**

(86) International application number:
**PCT/JP2008/065664**

(87) International publication number:
**WO 2009/031494 (12.03.2009 Gazette 2009/11)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.09.2007 JP 2007233035**

(71) Applicant: **Nitto Denko Corporation Ibaraki-shi, Osaka 567-8680 (JP)**

(72) Inventors:
• **MITSUOKA, Yoshiaki**
  **Ibaraki-shi**
  **Osaka 567-8680 (JP)**
• **FUJII, Takahiro**
  **Ibaraki-shi**
  **Osaka 567-8680 (JP)**

(74) Representative: **Schwabe - Sandmair - Marx Patentanwälte**
**Stuntzstraße 16**
**81677 München (DE)**

(54) **VIBRATION DAMPING SHEET**

(57)     Disclosed is a vibration damping sheet (1) comprising a viscoelastic layer (2) containing a hollow inorganic fine particle, and a constraining layer (3) arranged on the viscoelastic layer (2).

FIG. 1

**Description**

TECHNICAL FIELD

The present invention relates to a vibration damping sheet, and more specifically to a vibration damping sheet used by sticking on an adherend in various industries.

BACKGROUND ART

Conventionally, in an automotive industry, since a vibration sound is generated from the moving vehicle, or an undesired noise is generated at the time of opening/closing the vehicle door, a vibration damping sheet to be stuck on an automobile steel plate has been known in order to prevent these vibration sound and noise.
As such vibration damping sheet, a vibration damping sheet having a rubber-based vibration damping layer has been known. A vibration damping sheet having inorganic powders contained in a rubber-based vibration damping layer has also been known in order to lessen vibration.
Further, there has been proposed a damping material laminating a foaming adhesive layer on an aluminum sheet or a polyester sheet as a vibration damping sheet (cf. for example, the following Patent Documents 1 and 2).

Patent Document 1: Japanese Unexamined Patent Publication No. 2007-21813
Patent Document 2: Japanese Unexamined Patent Publication No. 2007-16170

DISCLOSURE OF THE INVENTION

PROBLEMS TO BE SOLVED

However, the containing of inorganic powders in the rubber-based vibration damping layer disadvantageously increases the weight of the vibration damping sheet and fails to reduce the weight of the adherend to be stuck on the vibration damping sheet.
Although the vibration damping materials proposed in Patent Documents 1 and 2 can reduce the weight, they have insufficient adhesion to the adherend.
Further, in the conventional rubber-based vibration damping layer, there is contamination on portions other than the sticking portion due to protrusion of the rubber-based vibration damping layer, or contamination (secondary contamination) due to adhesion to a worker's hand during sticking, so that considerable care is needed in handling of the vibration damping sheet.
It is an object of the present invention to provide a vibration damping sheet capable of both improving the vibration damping property and reducing the weight, and having excellent adhesion to achieve easy sticking.

MEANS FOR SOLVING THE PROBLEMS

To achieve the above object, the vibration damping sheet of the present invention includes a viscoelastic layer containing a hollow inorganic fine particle and a restricting layer laminated on the viscoelastic layer.
In the vibration damping sheet of the present invention, it is preferable that the hollow inorganic fine particle is a hollow glass balloon.
In the vibration damping sheet of the present invention, it is preferable that the content ratio of the hollow inorganic fine particle in the viscoelastic layer is from 5 to 50% by volume.
In the vibration damping sheet of the present invention, it is preferable that the viscoelastic layer further includes an air bubble cell.
In the vibration damping sheet of the present invention, it is preferable that the content ratio of the air bubble cell ranges from 5 to 50% by volume.
In the vibration damping sheet of the present invention, it is preferable that the viscoelastic layer contains a base polymer obtained by polymerization of monomer components predominantly containing an alkyl(meth)acrylate.
In the vibration damping sheet of the present invention, it is preferable that the viscoelastic layer is obtained by ultraviolet curing.
In the vibration damping sheet of the present invention, it is preferable that the restricting layer contains a glass fiber cloth and/or an aluminum foil.
In the vibration damping sheet of the present invention, it is preferable that the vibration damping sheet is held on a stainless steel plate when allowed to stand at 80°C for 2 hours during the following holding power test:
Holding power test of the vibration damping sheet: A vibration damping sheet is processed into a piece of 100 mm x 25 mm to obtain a sample. Subsequently, a 25 mm x 25 mm portion from the upper end of the sample is placed on the lower end portion of a stainless steel plate, and the sample and the lower end portion of the stainless steel plate are press-contacted with each other by reciprocating a 5 kg roller once at 23°C. Thereafter, the press-contacted portions are heated at 180°C for 30 minutes, the upper end portion of the stainless steel plate is then fixed, and a 1 kg-weight is hung down from the lower end portion of the sample on the condition of a temperature of 80°C. After the sample is left to stand at 80°C for 2 hours, the drop-off of the sample is examined.

EFFECT OF THE INVENTION

The vibration damping sheet of the present invention achieves both improvement in vibration-damping property and weight reduction. Therefore, the generation of vibration sound or noise can be effectively prevented by sticking on an adherend which requires weight reduction, more specifically, on a steel plate of a vehicle body.
In addition, the vibration damping sheet of the present invention has excellent adhesion, so that the vibration damping sheet can be reliably stuck on an adherend, allowing the above-mentioned effects to be maintained over a long period of time.
Further, the vibration damping sheet of the present invention has the viscoelastic layer containing hollow inorganic fine particles, which can realize easy handling of the vibration damping sheet.

BRIEF DESCRIPTION OF THE DRAWINGS

FIG. 1 shows drawings for explaining arrangement of a vibration damping sheet as an embodiment of the present invention on a steel plate in order to dampen vibration of the steel plate, (a) showing the step of preparing a vibration damping sheet and removing a release paper, and (b) showing the step of arranging the vibration damping sheet on a steel plate;
FIG. 2 is a drawing for explaining an arrangement of a vibration damping sheet and a steel plate for evaluation of a loss factor;
FIG. 3 is a general drawing for explaining calculation of a secondary resonant frequency f0 and half-value widths (f1, f2) for evaluation of a loss factor;
FIG. 4 is a graph showing the evaluation results of loss factors of the vibration damping sheets in Examples 1 to 6 and Comparative Examples 1 to 5; and
FIG. 5 is a sectional view for explaining a sticking state of a vibration damping sheet and a stainless steel plate in the holding power test.

EMBODIMENT OF THE INVENTION

The vibration damping sheet of the present invention includes a viscoelastic layer and a restricting layer laminated on the viscoelastic layer.
The viscoelastic layer is formed from a base polymer in which hollow inorganic fine particles are dispersed.
The outer shape of the hollow inorganic fine particle is not particularly limited as long as its inner shape is hollow. Examples of the outer shape of the hollow inorganic fine particle include a spherical shape and a shape of a polyhedron (e.g., regular tetrahedron, regular hexahedron (cube), regular octahedron, regular dodecahedron, etc.). Among them, the shape of the hollow inorganic fine particle is preferably a hollow spherical shape, i.e., a hollow balloon.
Examples of the inorganic material of the hollow inorganic fine particle include glass, shirasu, silica, alumina, and ceramics. Among them, glass is preferable.
More specifically, the hollow inorganic fine particle is preferably a hollow glass balloon.
Commercially available products can be used as hollow inorganic fine particles, and examples thereof include CEL-STAR series (CEL-STAR series, hollow glass balloons, manufactured by Tokai Kogyo Co., Ltd.).
The average maximum length of the hollow inorganic fine particle (an average particle size in the spherical case) is in the range of, for example, 1 to 500 $\mu$m, preferably 5 to 200 $\mu$m, or more preferably 10 to 100 $\mu$m.
The hollow inorganic fine particle has a density (true density) of, for example, 0.1 to 0.8 g/cm$^3$, or preferably 0.12 to 0.5 g/cm$^3$. When the density of the hollow inorganic fine particle is less than the above range, the hollow inorganic fine particles significantly float during blending thereof, so that it may be difficult to uniformly disperse the hollow inorganic fine particles. On the other hand, when the density of the hollow inorganic fine particle exceeds the above range, production cost may increase.
These hollow inorganic fine particles can be used alone or in combination of two or more kinds.
The content ratio of the hollow inorganic fine particle is in the range of, for example, 5 to 50% by volume, preferably 10 to 50% by volume, or more preferably 15 to 40% by volume, relative to the volume of the viscoelastic layer.

When the mixing proportion of the hollow inorganic fine particle is less than the above range, the effect of adding the hollow inorganic fine particle may deteriorate. On the other hand, when the mixing proportion thereof exceeds the above range, the adhesive strength of the viscoelastic layer may decrease.

The containing of the hollow inorganic fine particles in the viscoelastic layer allows improvement in the vibration damping property and reduction in the weight thereof.

The base polymer is obtained by polymerization of monomer components predominantly containing an alkyl(meth) acrylate.

Examples of the alkyl(meth)acrylate include alkyl(meth)acrylate (with an alkyl moiety having 1 to 20 carbon atoms) with a linear or branched alkyl moiety such as methyl (xneth)acrylate, ethyl (meth)acrylate, propyl (meth)acrylate, isopropyl (meth)acrylate, butyl (meth)acrylate, isobutyl (meth)acrylate, sec-butyl (meth)acrylate, tert-butyl (meth)acrylate, pentyl (meth)acrylate, isopentyl (meth)acrylate, hexyl (meth)acrylatc, heptyl (meth)acrylate, octyl (meth)acrylate, 2-ethylhexyl (meth)acrylate, isooctyl (tneth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate.

Examples of the alkyl(meth)acrylate also include (meth)acrylate with an alicyclic alkyl moiety such as cyclopentyl (meth)acrylate, cyclohexyl (meth)acrylate, and isoboronyl (meth)acrylata.

These (meth)acrylates can be used alone or in combination of two or more kinds.

Among these (meth)acrylates, alkyl(meth)acrylate with an alkyl moiety having 2 to 14 carbon atoms is preferable, or alkyl(meth)acrylate with an alkyl moiety having 2 to 10 carbon atoms is more preferable.

The monomer components can optionally contain a polar group-containing vinyl monomer or a polyfunctional vinyl monomer as well as essentially containing the aforementioned alkyl(meth)acrylate.

Examples of the polar group-containing vinyl monomer include carboxyl group-containing vinyl monomers such as (meth)acrylic acid, itaconic acid, maleic acid, fumaric acid, crotonic acid, and isocrotonic acid, or anhydride thereof (such as maleic anhydride); hydroxyl group-containing vinyl monomers such as hydroxyethyl (meth)acrylate, hydroxypropyl (meth)acrylate, and hydroxybutyl (meth)acrylate; amide group-containing vinyl monomers such as acrylamide, methacrylamide, N,N-dimethyl (meth)acrylamide, N-methylol (meth)acrylamide, N-methoxymethyl (meth)acrylamide, and N-butoxymethyl (meth)acrylamide; amino group-containing vinyl monomers such as aminoethyl (meth)acrylate, dimethylaminoethyl (meth)acrylate, and tert-butylaminoethyl (meth)acrylate; glycidyl group-containing vinyl monomers such as glycidyl (meth)acrylate and methyl glycidyl (meth)acrylate; cyano group-containing vinyl monomers such as acrylonitrile and methacrylonitrile; and heterocycle-containing vinyl monomers such as N-vinyl-2-pyrrolidone, (meth) acryloyl morpholine, N-vinylpyridine, N-vinylpiperidone, N-vinylpyrimidine, N-vinylpiperazine, N-vinylpyrrole, N-vinylimidazole, and N-vinyloxazol.

Among the polar group-containing vinyl monomers, a carboxyl group-containing vinyl monomer or its anhydride is preferable. These polar group-containing vinyl monomers can be used alone or in combination of two or more kinds.

Examples of the polyfunctional vinyl monomer include (mono or poly)alkylene glycol di(meth)acrylates, for example, (mono or poly)ethylene glycol di(meth)acrylates such as ethylene glycol di(meth)acrylate, diethylene glycol di(aneth) acrylate, triethylene glycol di(meth)acrylate, trimethylolpropane tri(meth)acrylate and tetraethylene glycol di(meth)acrylate, and (mono or poly)propylene glycol di(meth)acrylates such as propylene glycol di(meth)acrylate; (meth)acrylate monomer of a polyhydric alcohol, for example, neopentyl glycol di(meth)acrylate, 1,6-hexandiol di(meth)acrylate, pentaerythritol di(meth)acrylate, trimethylolpropane tri(meth)acrylate, pentaerythritol tri(meth)acrylate, and dipentaerythritol hexa(meth)acrylate, and divinylbenzene. Examples of the polyfunctional monomer also include epoxy acrylate, polyester acrylate and urethane acrylate.

Among the polyfunctional vinyl monomers, 1,6-hexandiol di(meth)acrylate is preferable. These polyfunctional vinyl monomers can be used alone or in combination of two or more kinds.

As for the amount of the monomer components, for example, in the monomer components, the amount of the polar group-containing vinyl monomer is, for example, 30% by weight or less, or preferably 3 to 20% by weight, the amount of the polyfunctional vinyl monomer is, for example, 2% by weight or less, or preferably 0.02 to 1% by weight, and the amount of the allcyl(meth)acrylate is the remainder thereof.

When the amount of the polar group-containing vinyl monomer or the polyfunctional vinyl monomer exceeds the above range, the cohesive force of the viscoelastic layer extremely increases, which may deteriorate the adhesion. On the other hand, when the amount of the polar group-containing vinyl monomer or the polyfunctional vinyl monomer is less than the above range, the cohesive force of the viscoelastic layer extremely decreases, which may fail to obtain a high shearing force.

The monomer components can further contain a surfactant as an optional component.

Examples of the surfactant preferably include a fluorochemical surfactant, and such fluorochemical surfactant has, for example, an oxy-C2-3 alkylene group and a fluorinated hydrocarbon group in its molecule.

Examples of the oxy-C2-3 alkylene group include an oxyethylene group and an oxypropylene group. Examples of the fluorinated hydrocarbon group include a perfluoro group.

The fluorochemical surfactant can be obtained as a copolymer, for example, by copolymerizing a monomer having an oxy-C2-3 alkylene group and a monomer having a fluorinated hydrocarbon group. Examples of the copolymer include a block copolymer, a random copolymer, and a graft copolymer, or preferably a copolymer having an oxy-C2-3 alkylene group and a fluorinated hydrocarbon group in a side chain.

Examples of the monomer having an oxy-C2-3 alkylene group include polyoxyalkylene (meth)acrylates such as polyoxyethylene (meth)acrylate, polyoxypropylene (meth)acrylate, and polyoxyethylene-polyoxypropylene (meth)acrylate. Examples of the monomer having a fluorinated hydrocarbon group include (meth)acrylate containing a fluorinated hydrocarbon, for example, perfluoroalkyl (meth)acrylate such as perfluorobutyl (meth)acrylate, perfluoroisobutyl (meth)acrylate, and perfluoropentyl (meth)acrylate.

The fluorochemical surfactant has a weight average molecular weight of, for example, 500 or more and less than 20000. Commercially available products can be used as a fluorochemical surfactant, and examples thereof include Surflon series (e.g., Surflon S-381, Surflon S-393, Surflon KH-20, and Surflon KH-40; manufactured by AGC Seimi Chemical Co., Ltd.).

The amount of the surfactant is in the range of, for example, 0.41 to 5 parts by weight, preferably 0.02 to 3 parts by weight, or more preferably 0.03 to 1 part by weight, per 100 parts by weight of the monomer components. The containing of such surfactant allows air bubbles to be stabilized.

To form the viscoelastic layer, first, the above-mentioned monomer components and hollow inorganic fine particles are mixed. Then, the monomer components containing the hollow inorganic fine particles (hereinafter referred to as a viscoelastic layer precursor in some cases.) are polymerized to thereby obtain a base polymer having the hollow inorganic fine particles dispersed therein. As a method of polymerizing a viscoelastic layer precursor, for example, photopolymerization or thermal polymerization is used. From the advantage of shortening of polymerization time, photopolymerization is preferable.

In the polymerization of the viscoelastic layer precursor, monomer components are polymerized at once (collective polymerization). Alternatively, as described later, in a first step, a part of the monomer components is first polymerized (partial polymerization) and, in a second step, the remainder thereof can subsequently be polymerized (two-step polymerization). Further, the monomer components can also be polymerized in three or more multiple steps. A polymerization initiator is used in polymerization of the monomer components, and in the case of photopolymerization, a photopolymerization initiator is used.

Examples of the photopolymerization initiator include a benzoin ether photopolymerization initiator, an acetophenone photopolymerization initiator, an $\alpha$-ketol photopolymerization initiator, an aromatic sulfonyl chloride photopolymerization initiator, a photoactive oxime photopolymerization initiator, a benzoin photopolymerization initiator, a benzyl photopolymerization initiator, a benzophenone photopolymerization initiator, and a thioxanthone photopolymerization initiator.

Specific examples of the benzoin ether photopolymerization initiator include benzoin methyl ether, benzoin ethyl ether, benzoin propyl ether, benzoin isopropyl ether, benzoin isobutyl ether, 2,2-dimethoxy-1,2-diphenylethane-1-on, and anisole methyl ether. Examples of the acetophenone photopolymerization initiator include 2,2-diethoxyacetophenone, 2,2-dimethoxy-2-phenylacetophenone, 1-hydroxycyclohexylphenyl ketone, 4-phenoxydichloroacetophenone, and 4-(t-butyl) dichloroacetophenone. Examples of the $\alpha$-ketol photopolymerization initiator include 2-methyl-2-hydroxypropiophenone and 1-[4-(2-hydroxyethyl) phenyl]-2-methylpropane-1-on. Examples of the aromatic sulfonyl chloride photopolymerization initiator include 2-naphthalene sulfonyl chloride. Examples of the photoactive oxime photopolymerization initiator include 1-phenyl-1,1-propanedione-2-(o-ethoxy carbonyl)-oxime.

Further, examples of the benzoin photopolymerization initiator include benzoin. Examples of the benzyl photopolymerization initiator include benzyl. Examples of the benzophenone photopolymerization initiator include benzophenone, benzoylbenzoic acid, 3,3'-dimethyl-4-methoxybenzophenone, polyvinyl benzophenone, and $\alpha$-hydroxycyclohexylphenyl ketone. Examples of the thioxanthone, photopolymerization initiator include thioxanthone, 2-chloro thioxanthone, 2-methyl thioxanthone, 2,4-dimethyl thioxanthone, isopropyl thioxanthone, 2,4-diisopropyl thioxanthone, and dodecyl thioxanthone.

These polymerization initiators can be used alone or in combination of two or more kinds. The amount of the polymerization initiator is in the range of, for example, 0.01 to 5 parts by weight, or preferably 0.05 to 3 parts by weight, per 100 parts by weight of the monomer components. In the photopolymerization, for example, visible light, ultraviolet light, or electron beam (e.g., X-rays, $\alpha$ rays, $\beta$ rays, $\gamma$ rays, etc.) is used as irradiation light. Among them, ultraviolet light is preferable.

According to the polymerization with the above-mentioned polymerization initiator (preferably, ultraviolet polymerization with a photopolymerization initiator), the monomer components are polymerized to be cured (preferably, ultraviolet cured), so that a viscoelastic layer in which hollow inorganic fine particles are dispersed in the base polymer predominantly containing an alkyl(meth)acrylate can be obtained.

In the formation of the adhesive layer, the monomer components are applied onto, for example, a substrate (e.g., polyethylene terephthalate base material, etc.) of which one side is subjected to peeling treatment and polymerized (ultraviolet cured) on the substrate. Alternatively, the monomer components are applied onto a restricting layer and polymerized (ultraviolet cured) on the restricting layer, so that a viscoelastic layer can be formed directly on the restricting layer.

Air bubble cells are preferably contained in the viscoelastic layer.

In order to contain air bubble cells in the viscoelastic layer, for example, air bubbles are mixed in a viscoelastic layer precursor and the viscoelastic layer precursor is then polymerized and cured.

As a gas (bubble forming gas) for forming air bubbles, for example, inert gas such as nitrogen, or air is used.

The air bubbles are mixed into the viscoelastic layer precursor using, for example, an apparatus provided with a disk having a through hole in the center portion thereof, a stator which is arranged on the disk and has a plurality of fine teeth, and a rotor which is arranged on the disk in opposed relation to the stator and has the same fine teeth as the stator. In this apparatus, a viscoelastic precursor is introduced between the teeth on the stator and the teeth on the rotor, and a bubble forming gas is introduced into the viscoelastic precursor through the through hole while the rotor is rotated at a high speed. Therefore, a viscoelastic layer precursor in which air bubbles are dispersed uniformly and finely can be obtained.

In order to suppress or prevent coalesce of the air bubbles, preferably the steps from the step of mixing air bubbles to the step of forming a viscoelastic layer are continuously performed in a series of steps. That is, immediately after mixing air bubbles, a viscoelastic layer is formed.

In order that the air bubbles mixed in the viscoelastic layer precursor are stably present, preferably, air bubbles are blended into the viscoelastic layer precursor as the last component. More preferably, the viscosity of a mixture (hereinafter referred to as a monomer mixture in some cases.) mixed with the monomer components before mixing of air bubbles is increased. The viscosity of the monomer mixture can be measured, for example, using a BH viscometer on the conditions of a rotor type of rotor No.5, a rotation rate of 10 s-1, and a measurement temperature of 30°C. The viscosity of the monomer mixture is in the range of, for example, 5 to 50 Pa·s, or preferably 10 to 40 Pa·s. When the viscosity of the monomer mixture is less than the above range, the mixed air bubbles may immediately coalesce or may escape from the monomer fixture. On the other hand, when the viscosity of the monomer mixture exceeds the above range, air bubbles are difficult to disperse uniformly in the monomer mixture.

The viscosity of the monomer mixture is adjusted, for example, by partially polymerizing the monomer mixture (e.g., (meth)acrylate, polar group-containing vinyl monomer, etc.) or by blending a thickening component such as acrylic rubber. Preferably, a monomer component is partially polymerized.

For partial polymerization of a monomer component, specifically, an alkyl(meth)acrylate and a polar group-containing vinyl monomer are mixed with a polymerization initiator to prepare a monomer mixture, and the monomer mixture is partially polymerized to prepare a syrup in which only a portion of the monomer mixture is polymerized. Subsequently, a polyfunctional vinyl monomer, a hollow inorganic fine particle, and a surfactant are blended with the syrup, to prepare a viscoelastic layer precursor having the above-mentioned viscosity. Thereafter, an unpolymerized monomer component in the viscoelastic layer precursor is polymerized to cure the viscoelastic layer precursor. Upon preparation of the syrup, hollow microspheres or an additive can also be blended together with blending of alkyl(meth)acrylate.

Therefore, the air bubbles dispersed uniformly in the viscoelastic layer precursor define a cell in a base polymer. This forms an air bubble cell dispersed uniformly in the base polymer.

The containing of an air bubble cell in the viscoelastic layer can more effectively achieve improvement in vibration damping property and weight reduction.

The content ratio of the air bubble cell in the viscoelastic layer thus obtained is in the range of, for example, 5 to 50% by volume, preferably 8 to 30% by volume, or more preferably 10 to 20% by volume. When the content ratio of the air bubble cell exceeds the above range, the vibration damping property may deteriorate. On the other hand, when the content ratio of the air bubble cell is less than the above range, the weight reduction effect may be difficult to obtain. The viscoelastic layer has a thickness of, for example, 0.3 to 3.0 mm.

The restricting layer is not particularly limited as long as it can be stuck on an adherend (i.e., a vibration body which is a vibration damping target) and can be stuck firmly on the viscoelastic layer. The restricting layer is in the form of a sheet and is formed of light weight and thin-film material to be stuck firmly and integrally with the viscoelastic layer. Examples of such material include glass fiber cloth and metal foil.

The glass fiber cloth, which is a cloth made of glass fibers, includes known glass fiber clothes. The glass fiber cloth also includes a resin-coated glass fiber cloth.

Examples of the metal foil include known metal foils such as aluminum foil (silver foil) and steel foil.

Preferably, a resin-coated glass fiber cloth or an aluminum foil is used as the material of the restricting layer.

The resin-coated glass fiber cloth is obtained by coating a known glass fiber cloth with a synthetic resin such as thermosetting resin or thermoplastic resin. As the synthetic resin, thermosetting resin is preferable, or epoxy resin is more preferable. Examples of the epoxy resin include bisphenol A type epoxy resin. In addition to bisphenol A type epoxy resin, the epoxy resin can also contain a curing agent (e.g., dicyandiamide), an acrylic acid polymer (e.g., polyacrylate), and a curing accelerator (e.g., imidazole compound).

The resin-coated glass fiber cloth is obtained, for example, by impregnating a glass fiber cloth with an aqueous dispersion (impregnation solution) in which the above-mentioned epoxy resin is dispersed in water and then drying it. After the impregnation, the aqueous dispersion can be squeezed excess off, for example, by using a mangle.

In the resin-coated glass fiber cloth, the amount of the epoxy resin impregnated in the glass fiber cloth after drying is in the range of, for example, 2 to 15 parts by weight per 100 parts by weight of the glass fiber cloth.

The restricting layer has a thickness of, for example, 0.05 to 2 mm, or preferably 0.1 to 1.9 mm. When the restricting layer is formed of aluminum foil, the thickness thereof is in the range of, for example, 0.005 to 1.0 mm. When the thickness of the aluminum foil is within the above range, the restricting layer can be reliably stuck firmly to the viscoelastic layer and can be processed into any shape.

If necessary, the vibration damping sheet of the present invention can have a release paper stuck on the surface (the surface opposite to the rear surface on which the restricting layer is stuck) of the viscoelastic layer before actually used.

The vibration damping sheet thus formed has a thickness (a total thickness of the viscoelastic layer and the restricting layer) of, for example, 0.305 to 4.0 mm.

The vibration damping sheet has a weight (basis weight) of, for example, less than 2 kg/m$^2$, or preferably less than 1.8 kg/m$^2$, and usually 0.1 kg/m$^2$ or more. When the basis weight of the vibration damping sheet exceeds the above range, it may be difficult to achieve weight reduction.

The vibration damping sheet has a loss factor, which is explained in Examples later, of, for example, 0.05 or more at any temperatures of 0°C, 20°C, 40°C, and 60°C during measurement of the vibration damping property (loss factor to be described later).

Further, in the holding power test described later, the vibration damping sheet is preferably held on a stainless steel plate when allowed to stand at 80°C for 2 hours.

Holding power test of the vibration damping sheet: A vibration damping sheet was processed into a piece of 100 mm x 25 mm to obtain a sample. Subsequently, a 25 mm x 25 mm portion from the upper end of the sample was placed on the lower end portion of a stainless steel plate, and the sample and the lower end portion of the stainless steel plate were press-contacted with each other by reciprocating a 5 kg roller once at 23°C. Thereafter, the press-contacted portions were heated at 180°C for 30 minutes, the upper end portion of the stainless steel plate was then fixed, and a 1 kg-weight was hung down from the lower end portion of the sample on the condition of a temperature of 80°C. After the sample was left to stand at 80°C for 2 hours, the drop-off of the sample was examined.

The vibration damping sheet of the present invention thus obtained is used, for example, in various industries. Specifically, the vibration damping sheet is used to dampen vibration of a steel plate by sticking on the automobile steel plate.

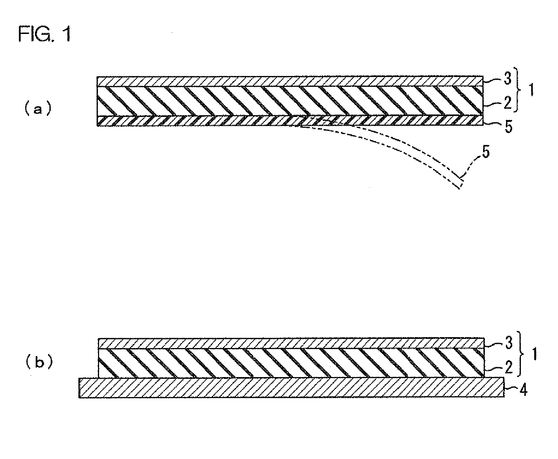

FIG. 1 shows drawings for explaining arrangement of a vibration damping sheet as an embodiment of the present invention on a steel plate in order to dampen vibration of the steel plate, (a) showing the step of preparing a vibration damping sheet and removing a release paper, and (b) showing the step of arranging a vibration damping sheet to a steel plate.

As shown in FIG. 1(a), the vibration damping sheet 1 has a viscoelastic layer 2 laminated on a restricting layer 3, and a release paper 5 being stuck on a surface of the viscoelastic layer 2. As shown in phantom line, upon use of the vibration damping sheet 1, the release paper 5 is peeled off from the surface of the viscoelastic layer 2, and as shown in FIG. 1(b), the surface of the viscoelastic layer 2 is stuck onto a steel plate 4 (a steel plate 4 before baking finish). If necessary, thereafter, using the heat during baking finish of the steel plate 4, the vibration damping sheet 1 is heated at a prescribed temperature (e.g., 160 to 210°C), so that the polymerization degree of the viscoelastic layer 2 can be enhanced.

Since the vibration damping sheet of the present invention achieves both improvement in vibration-damping property and weight reduction, it is stuck on a steel plate of a vehicle body, which requires weight reduction, thereby allowing the generation of vibration sound or noise to be effectively prevented.

In addition, since the vibration damping sheet of the present invention has excellent adhesion, it can maintain the above-mentioned effects over a long period of time by reliably sticking on the steel plate.

Further, since in the vibration damping sheet of the present invention, the viscoelastic layer contains hollow inorganic fine particles, easy handling of the vibration damping sheet, specifically, prevention of protrusion of the viscoelastic layer caused by sticking of the viscoelastic layer and the restricting layer together, can be realized.

EXAMPLES

While in the following, the present invention is described in further detail with reference to Examples and Comparative Examples, the present invention is not limited to any of them by no means.

Example 1

(Formation of Viscoelastic Layer)

To a monomer component in which 90 parts by weight of 2-ethylhexyl acrylate and 10 parts by weight of acrylic acid were mixed, 0.05 parts by weight of IRGACURE 651 (trade name, 2,2-dimethoxy-1,2-diphenylethane-1-on, manufactured by Ciba Specialty Chemicals K.K.) and 0.05 parts by weight of IRGACURE 184 (trade name, 1-hydroxy-cyclohexyl-phenyl ketone, manufactured by Ciba Specialty Chemicals K.K.) were blended, so that a monomer mixture was prepared. Thereafter, the monomer mixture was exposed to ultraviolet light (wavelength of 300 to 400 nm) with an illuminance of about 5 mW until the viscosity (BH viscometer, No. 5 rotor, 10 s-1, measurement temperature of 30°C) of the monomer mixture became about 15 Pa·s, to prepare a syrup in which the monomer mixture was partially polymerized.

Next, 0.1 parts by weight of 1,6-hexanediol diacrylate was added to the syrup and a hollow glass balloon (trade name "CEL-STAR Z-27", manufactured by Tokai Kogyo Co., Ltd.) was subsequently added at a proportion of 30% by volume relative to the volume of the syrup (not containing 1,6-hexanediol diacrylate). Further, 1 part by weight of a fluorochemical surfactant (trade name "Surflon S-393", manufactured by AGC Seimi Chemical Co., Ltd.; acrylic copolymer having a polyoxyethylene group and a fluorinated hydrocarbon group in a side chain, weight average molecular weight MW=8300) was added thereto to prepare a viscoelastic layer precursor. The hollow glass balloon in the viscoelastic layer precursor was about 23% by volume relative to the volume of the viscoelastic layer precursor.

Thereafter, nitrogen was introduced into the prepared viscoelastic layer precursor using the above-mentioned apparatus and air bubbles of nitrogen were mixed uniformly to be dispersed, to thereby obtain a viscoelastic layer precursor with air bubble cells dispersed therein. In the mixing of air bubbles, the content ratio of the air bubble cell therein was adjusted to be 15% by volume.

Subsequently, while being introduced into a wet lamination roll coater using a tube (19 mm in inner diameter and about 1.5 m in length), the above-mentioned viscoelastic layer precursor was filled between two sheets of polyethylene terephthalate substrate (opposed faces were subjected to peeling treatment) spaced in opposed relation to each other so as to be formed into a layer having a thickness of 0.8 mm after drying and curing. That is, the layered viscoelastic layer precursor was sandwiched with two sheets of polyethylene terephthalate substrate.

Then, both surfaces of the viscoelastic layer precursor were exposed to ultraviolet light (with a wavelength of 300 to 400 nm) with an illuminance of about 5 mW for 3 minutes to cure the viscoelastic layer precursor, so that a viscoelastic layer was formed. The content ratio of the air bubble cell in the viscoelastic layer was 23% by volume.

(Formation of Restricting Layer)

Glass fiber bundles with a glass filament diameter of 9 $\mu$m, the number of bundles of 400, and a yarn number of 67.5 tex were woven into a plain cloth having a density of warp yarn of 44/25 mm and a density of welt yarn of 32/25 mm. Thereafter, the woven glass fiber cloth was thermally degreased to remove the sizing agent therefrom, thereby producing a glass fiber cloth of IPC standard 7628 type. The glass fiber cloth had a mass of 210 g/m$^2$, a thickness of 200 $\mu$m, and air permeability of 3 cm$^3$/cm$^2$/sec.

To 40 parts by weight of water were added 0.7 parts by weight of N-$\beta$-aminoethyl-$\gamma$-aminopropyl trimethoxysilane (SILQUEST A1120, manufactured by Union Carbide Corporation), 40 parts by weight of bisphenol A type epoxy resin of aqueous dispersion (Epolsion HC130, a solid content of 45% by weight, manufactured by Nippon NSC Ltd.), 1.5 parts by weight of acrylic ester copolymer resin aqueous emulsion (Yodosol KA10, a solid content of 27% by weight, manufactured by Nippon NSC Ltd.), a curing agent solution prepared by dissolving 2 parts by weight of dicyandiamide and 0.2 parts by weight of 2-methylimidazole in 10 parts by weight of warm water, and 0.36 parts by weight of ammonia water (30% by weight solution), and further, water was added thereto to amount to 100 parts by weight in total, thereby preparing an impregnation solution comprising the epoxy resin composition of the aqueous dispersion.

Thereafter, a glass fiber cloth was impregnated with the impregnation solution, and the impregnation solution was squeezed excess off with a mangle. The resulting glass fiber cloth was made to pass through a dryer which was heated to 150°C, to thereby obtain a resin-coated glass fiber cloth impregnated at a proportion of 4 parts by weight of the epoxy resin composition per 100 parts by weight of the glass fiber cloth.

The restricting layer made of the resin-coated glass fiber cloth had a thickness of 0.19 mm and an air permeability (in conformity with JIS R3420 7.14) of 0.01 cm$^3$/cm$^2$/sec.

Further, the restricting layer was cut into a 10 mm width x 100 mm length piece and the tensile strength of the piece was measured in a distance between the chucks of 50 mm at a rate of 5 mm/min using a universal testing machine to thereby calculate the Young's modulus of the restricting layer. The Young's modulus thereof was 14.5GPa.

(Preparation of Vibration Damping Sheet)

The resin-coated glass fiber cloth was stuck together onto the viscoelastic layer with a sticking roll (a laminator). Then, a release paper was stuck onto a surface opposite to the surface of the viscoelastic layer on which the restricting layer was stuck, thereby preparing a vibration damping sheet (cf. FIG. 1(a)).

Example 2

Except that the thickness of the viscoelastic layer was changed from 0.8 mm to 1.2 mm, a viscoelastic layer was formed in the same manner as in Example 1 to prepare a vibration damping sheet.

Example 3

Except that the thickness of the viscoelastic layer was changed from 0.8 mm to 2.0 mm and the content ratio of the air bubble cell in the viscoelastic layer was adjusted from 15% by volume to 8% by volume, a viscoelastic layer was formed in the same manner as in Example 1 to prepare a vibration damping sheet.

Example 4

The same treatment as in Example 1 was carried out to prepare a vibration damping sheet, except that a 0.12-mm-thick aluminum foil (JIS H4160 A-3003H-0 standard item) was used as the restricting layer.

Example 5

The same treatment as in Example 2 was carried out to prepare a vibration damping sheet, except that a 0.12-mm-thick aluminum foil (JIS H4160 A-3003H-0 standard item) was used as the restricting layer.

Example 6

The same treatment as in Example 3 was carried out to prepare a vibration damping sheet, except that a 0.12-mm-thick aluminum foil (JIS H4160 A-3003H-0 standard item) was used as the restricting layer.

Comparative Example 1

The same treatment as in Example 1 was carried out to prepare a vibration damping sheet, except that the restricting layer was not provided.

Comparative Example 2

The same treatment as in Example 2 was carried out to prepare a vibration damping sheet, except that the restricting layer was not provided.

Comparative Example 3

The same treatment as in Example 3 was carried out to prepare a vibration damping sheet, except that the restricting layer was not provided.

Comparative Example 4

The same treatment as in Example 1 was carried out to prepare a vibration damping sheet, except that a adhesive double coated tape (No. 5971, 0.125 mm in thickness, acrylic e adhesive, and not containing hollow inorganic fine particles; manufactured by NITTO DENKO CORP.) was used as the viscoelastic layer and the restricting layer was not provided.

Comparative Example 5

The same treatment as in Example 1 was carried out to prepare a vibration damping sheet, except that a adhesive double coated tape (No. 5971, 0.125 mm in thickness, acrylic adhesive, and not containing hollow inorganic fine particles; manufactured by NITTO DENKO CORP.) was used as the viscoelastic layer.

Comparative Example 6

A commercially available vibration damping material (LEGETOLEX D300N, 1.5 mm in total thickness, manufactured by NITTO DENKO CORP.) having a rubber viscoelastic layer and an aluminum foil laminated on the rubber viscoelastic layer was used as the vibration damping sheet.

Comparative Example 7

A commercially available vibration damping material (LEGETOLEX D350, 2.2 mm in total thickness, manufactured by NITTO DENKO CORP.) having a rubber viscoelastic layer and a resin-coated glass fiber cloth laminated on the rubber viscoelastic layer was used as the vibration damping sheet.

(Evaluation)

1) Loss Factor

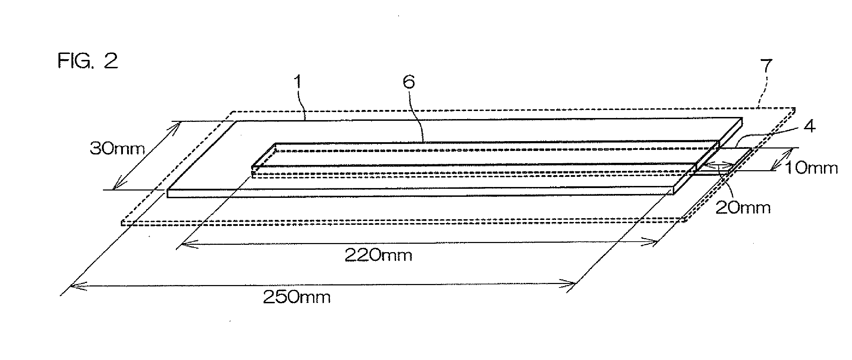

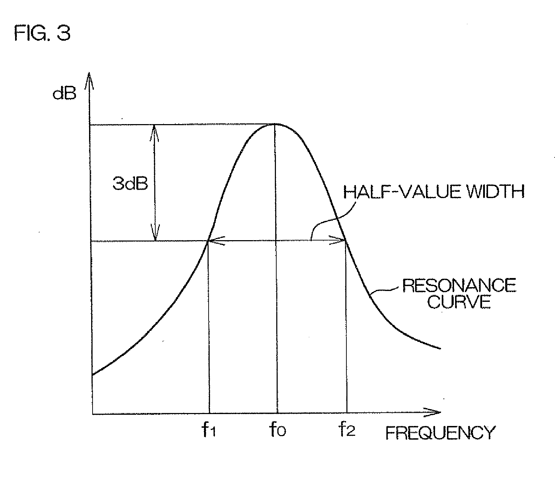

As referred to FIG. 2, each of the vibration damping sheets 1 obtained in Examples 1 to 6 and Comparative Examples 1 to 5 was cut into a size of 250 x 30 mm and the release paper 5 (cf. FIG. 1 (a)) was peeled off therefrom. Subsequently, each cut piece was placed on the oiled surface of the steel plate (oiled, cold-rolled steel plate) 4 having a size of 220 x 10 x 0.8 mm, which was arranged on a doubling plate 7, so that a 20 mill long portion of the lengthwise one end portion of the steel plate 4 was exposed. Then, the vibration damping sheet 1 was heated at temperatures of 0°C, 20°C, 40°C, and 60°C, and the viscoelastic layer 2 was welded to the steel plate 4. Thereafter, as indicated by the bold line in FIG. 2, the vibration damping sheet 1 was cut out so that the vibration damping sheet 1 and the steel plate 4 had an identical size (except the exposed portion) in plane view, thereby preparing a sample 6.
Next, the exposed portion of the steel plate 4 of the sample 6 was fixed and measured using a loss factor measuring apparatus (trade name, MS18143, manufactured by B & K). As referred to FIG. 3, a secondary resonant frequency f0 was calculated from the resulting resonance curve and further, half-value widths (f1, f2) obtained from f0 were calculated, so that a loss factor (system loss factor) d was calculated by the following formula (1):
$$\text{Loss Factor } d = (f2\text{-}f1)/f0 \qquad \ldots (1)$$

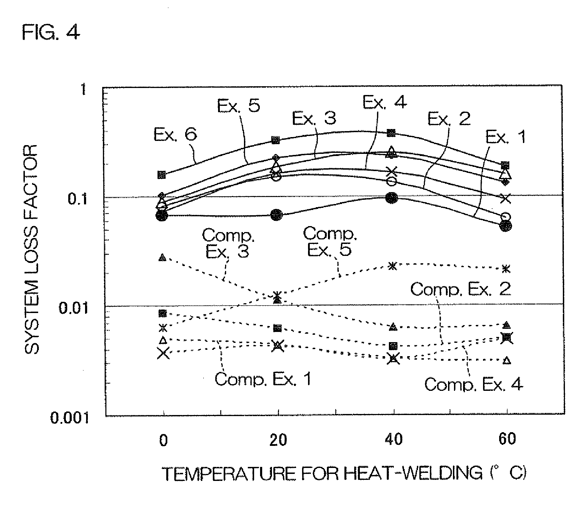

The results are shown in the graph of FIG. 4.
The resonance curve shown in FIG. 3 shows a general drawing for explaining calculation of a secondary resonant frequency f0 and half-value widths (f1, f2) and does not show a resonance curve of any of Examples 1 to 6 and Comparative Examples 1 to 5.

2) Holding Power

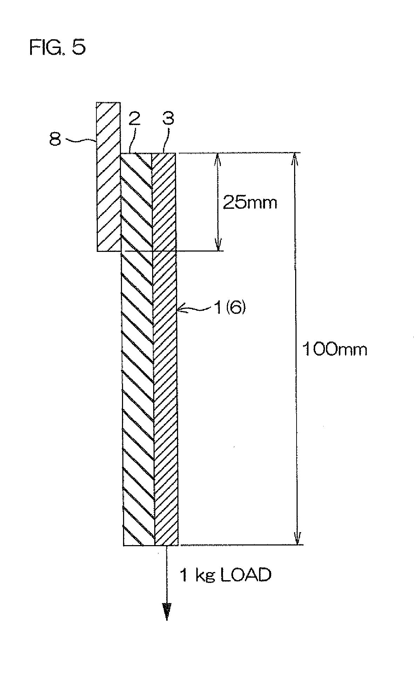

As referred to FIG. 5, each of the vibration damping sheets 1 prepared in Examples 1 to 6 and Comparative Examples 1 to 7 was cut into a size of 100 mm x 25 mm, and the release paper 5 was peeled off therefrom to prepare a sample 6. Subsequently, a 25 mm x 25 mm portion from the upper end of the sample 6 was placed on the lower end portion of a stainless steel plate 8, and the sample 6 and the lower end portion of the stainless steel plate 8 were press-contacted with each other by reciprocating a 5 kg roller once at 23°C.
Thereafter, the press-contacted portions were heated at 180°C for 30 minutes, the upper end portion of the stainless steel plate 8 was then fixed, and a 1 kg-weight was hung down from the lower end portion of the sample 6 on the condition of a temperature of 80°C. After the sample 6 was left to stand at 80°C for 2 hours, the drop-off of the sample 6 was examined.
The results are shown in Table 1.
[Table 1]

| | | Vibration Damping Sheet | | | Holding Power |
|---|---|---|---|---|---|
| | | Restricting Layer | Thickness (mm) | Basis Weight (kg/m$^2$) | Drop-off of Stainless Steel Plate |
| Ex. 1 | | Glass Fiber Cloth $^{*1}$ | 1 | 0.732 | Not dropped |
| Ex. 2 | | Glass Fiber Cloth $^{*1}$ | 1.4 | 1.01 | Not dropped |
| Ex. 3 | | Glass Fiber Cloth $^{*1}$ | 2.2 | 1.771 | Not dropped |
| Ex. 4 | | Aluminum Foil | 0.9 | 0.808 | Not dropped |
| Ex. 5 | | Aluminum Foil | 1.3 | 1.085 | Not dropped |
| Ex. 6 | | Aluminum Foil | 2.1 | 1.846 | Not dropped |
| Comp. Ex. 1 | | -- | 0.8 | 0.51 | Not dropped |
| Comp. Ex. 2 | | -- | 1.2 | 0.788 | Not dropped |
| Comp. Ex. 3 | | -- | 2 | 1.55 | Not dropped |
| Comp. Ex. 4 | | -- | 0.125 | 0.125 | Dropped |
| Comp. Ex. 5 | | Glass Fiber Cloth $^{*1}$ | 0.3 | 0.347 | Dropped |
| Comp. Ex. 6 | | Aluminum Foil | 1.5 | 2.1 | Dropped |
| Comp. Ex. 7 | | Glass Fiber Cloth $^{*1}$ | 2.2 | 2.9 | Dropped |
| *1: Resin-coated glass fiber cloth | | | | | |

While the illustrative embodiments of the present invention are provided in the above description, such is for illustrative purpose only and it is not to be construed restrictively. Modification and variation of the present invention that will be obvious to those skilled in the art is to be covered by the following claims.

INDUSTRIAL APPLICABILITY

The vibration damping sheet of the present invention can be used in the field of preventing generation of vibration sound or noise of steel plates of the bodies of vehicles.

**Claims**

1.   A vibration damping sheet comprising:

   a viscoelastic layer comprising a hollow inorganic fine particle and
   a restricting layer laminated on the viscoelastic layer.

2.   The vibration damping sheet according to claim 1, wherein the hollow inorganic fine particle is a hollow glass balloon.

3.   The vibration damping sheet according to claim 1, wherein the content ratio of the hollow inorganic fine particle in the viscoelastic layer is from 5 to 50% by volume.

4.   The vibration damping sheet according to claim 1, wherein the viscoelastic layer further comprises an air bubble cell.

5.   The vibration damping sheet according to claim 4, wherein the content ratio of the air bubble cell ranges from 5 to 50% by volume.

6.   The vibration damping sheet according to claim 1, wherein the viscoelastic layer comprises a base polymer obtained by polymerization of monomer components predominantly comprising an alkyl(meth)acrylate.

7.   The vibration damping sheet according to claim 1, wherein the viscoelastic layer is obtained by ultraviolet curing.

8. The vibration damping sheet according to claim 1, wherein the restricting layer comprises a glass fiber cloth and/or an aluminum foil.

9. The vibration damping sheet according to claim 1, wherein the vibration damping sheet is held on a stainless steel plate when allowed to stand at 80°C for 2 hours during the following holding power test:

   Holding power test of the vibration damping sheet: A vibration damping sheet is processed into a piece of 100 mm x 25 mm to obtain a sample. Subsequently, a 25 mm x 25 mm portion from the upper end of the sample is placed on the lower end portion of a stainless steel plate, and the sample and the lower end portion of the stainless steel plate are press-contacted with each other by reciprocating a 5 kg roller once at 23°C. Thereafter, the press-contacted portions are heated at 180°C for 30 minutes, the upper end portion of the stainless steel plate is then fixed, and a 1 kg-weight is hung down from the lower end portion of the sample on the condition of a temperature of 80°C. After the sample is left to stand at 80°C for 2 hours, the drop-off of the sample is examined.

FIG. 1

(a)

(b)

FIG. 2

30mm

250mm

220mm

20mm

10mm

FIG. 3

FIG. 4

FIG. 5

8

2  3

25mm

1 (6)

100mm

1 kg LOAD

**EP 2 187 087 A1**

## INTERNATIONAL SEARCH REPORT

International application No.

PCT/JP2008/065664

A. CLASSIFICATION OF SUBJECT MATTER
*F16F15/02*(2006.01)i, *B32B7/02*(2006.01)i, *B32B25/02*(2006.01)i

According to International Patent Classification (IPC) or to both national classification and IPC

B. FIELDS SEARCHED

Minimum documentation searched (classification system followed by classification symbols)
F16F15/02, B32B7/02, B32B25/02

Documentation searched other than minimum documentation to the extent that such documents are included in the fields searched
Jitsuyo Shinan Koho      1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 05-131592 A  (Nitto Denko Corp.),<br>28 May, 1993 (28.05.93),<br>Par. Nos. [0013], [0017] to [0018], [0023]<br>(Family: none) | 1-2,8<br>3-7,9 |
| Y | JP 10-212330 A  (Sekisui Chemical Co., Ltd.),<br>11 August, 1998 (11.08.98),<br>Par. Nos. [0052] to [0064]<br>(Family: none) | 3-7,9 |
| Y | JP 2006-22189 A  (Nitto Denko Corp.),<br>26 January, 2006 (26.01.06),<br>Par. Nos. [0082] to [0083], [0097]<br>(Family: none) | 3-7,9 |

[X] Further documents are listed in the continuation of Box C.      [ ] See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>14 November, 2008 (14.11.08) | Date of mailing of the international search report<br>25 November, 2008 (25.11.08) |
| Name and mailing address of the ISA/<br>Japanese Patent Office | Authorized officer |
| Facsimile No. | Telephone No. |

Form PCT/ISA/210 (second sheet) (April 2007)

18

**INTERNATIONAL SEARCH REPORT**

International application No.

PCT/JP2008/065664

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-179561 A  (Nitto Denko Corp.),<br>07 July, 2005 (07.07.05),<br>Par. Nos. [0091] to [0093], [0096] to [0097]<br>(Family: none) | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007021813 A

- JP 2007016170 A